# EUROPEAN PATENT SPECIFICATION

(11) **EP 4 303 254 B1**
(45) Date of publication and mention of the grant of the patent: **25.11.2026**
(21) Application number: 22762901.1
(22) Date of filing: 07.02.2022
(51) Int. Cl.: C08J 9/16, C08F 257/02

(54) **METHOD FOR PRODUCING EXPANDABLE MODIFIED POLYSTYRENE-BASED RESIN PARTICLES; EXPANDABLE MODIFIED POLYSTYRENE-BASED RESIN PARTICLES, AND USE THEREOF**
VERFAHREN ZUR HERSTELLUNG VON EXPANDIERBAREN MODIFIZIERTEN POLYSTYROLHARZTEILCHEN, EXPANDIERBARE MODIFIZIERTE POLYSTYROLHARZTEICHEN UND VERWENDUNG DAVON
PROCÉDÉ DE PRODUCTION DE PARTICULES DE RÉSINE Á BASE DE POLYSTYRÈNE EXPANSIBLE MODIFIÉ, PARTICULES DE RÉSINE Á BASE DE POLYSTYRÈNE EXPANSIBLE MODIFIÉ, ET UTILISATION DE CELLES-CI

(30) Priority: 03.03.2021 JP 2021033938
(43) Date of publication of application: 10.01.2024
(73) Proprietor: Kaneka Corporation, Osaka-shi, Osaka 530-8288 (JP)
(72) Inventor: IIDA, Atsushi, Takasago-shi, Hyogo 676-8688 (JP); SUZUKI, Kirito, Takasago-shi, Hyogo 676-8688 (JP); KIGUCHI, Taro, Takasago-shi, Hyogo 676-8688 (JP)
(74) Representative: Vossius & Partner Patentanwälte Rechtsanwälte mbB
(86) International application number: PCT/JP2022/004587
(87) International publication number: WO 2022/185844

(56) References cited:
- EP-A1- 1 266 929
- WO-A1-01/48068
- JP-A- 2002 348 400
- JP-A- 2002 348 400
- JP-A- 2006 028 373
- JP-A- 2009 120 661
- JP-A- H0 649 263

## Description

### Technical Field

The present invention relates to a method for producing expandable modified polystyrene-based resin particles, and use thereof.

### Background Art

Expandable polystyrene-based resin particles are a well-known type of expandable resin particles. Expandable polystyrene-based resin particles are generally widely utilized due to having easy moldability into a molded product by in-mold foam molding and thus being inexpensive.

Patent Literature 1 discloses a method for producing expandable modified polystyrene-based resin particles. In the method, a polystyrene seed resin is impregnated with styrene and a conjugated diene, subjected to polymerization, and then impregnated with a blowing agent.

Patent Literature 2 discloses a method for producing expandable modified polystyrene-based resin particles. In the method, a polystyrene seed resin is impregnated with styrene and a conjugated diene and subjected to polymerization, then the styrene is further caused to react, and a resultant product is impregnated with a blowing agent in a final step.

### Citation List

### [Patent Literatures]

[Patent Literature 1]
   International Publication No. WO 98/029485
[Patent Literature 2]
   International Publication No. WO 2001/048068

### Summary of Invention

### Technical Problem

In terms of crack resistance, the above-described known techniques were improvements as compared with expandable polystyrene-based resin particles which were common on the technology level at the time of development of the known techniques. However, it was found that the known techniques had room for improvement in terms of crack resistance. Specifically, the quality of expandable modified polystyrene-based resin particles varied from particle to particle, so that the quality of a foamed molded product tended to vary in terms of crack resistance.

An embodiment of the present invention has been accomplished in response to the above issue, and an object thereof is to provide: a method for producing novel modified polystyrene-based resin particles from which expandable modified polystyrene-based resin particles can be obtained, the expandable modified polystyrene-based resin particles having little particle-to-particle variation in gel fraction, so that a foamed molded product having little variation in crack resistance can be obtained from the expandable modified polystyrene-based resin particles; a method for producing the expandable modified polystyrene-based resin particles; and technologies related thereto.

### Solution to Problem

The inventors of the present invention conducted a diligent study in order to attain the object, and completed the present invention. Specifically, The invention is set out in the appended set of claims.

### Advantageous Effects of Invention

An embodiment of the present invention makes it possible to provide: novel modified polystyrene-based resin particles from which expandable modified polystyrene-based resin particles can be obtained, the expandable polystyrene-based resin particles having little particle-to-particle variation in gel fraction, so that a foamed molded product having little variation in crack resistance can be obtained from the expandable polystyrene-based resin particles; a method for producing the expandable modified polystyrene-based resin particles; and technologies related thereto.

### Description of Embodiments

The following description will discuss embodiments of the present invention. The present invention is not, however, limited to these embodiments. The present invention is not limited to the arrangements described below, but may be altered within the scope of the claims by a person skilled in the art. The present invention also encompasses, in its technical scope, any embodiment derived by combining technical means disclosed in differing embodiments and Examples. Further, it is possible to form a new technical feature by combining the technical means disclosed in the respective embodiments.

Unless otherwise specified herein, a numerical range expressed as "A to B" means "not less than A (equal to or more than A) and not more than B (equal to or less than B)".

### [1. Technical idea of an embodiment of the present invention]

The conventional techniques as described in Patent Literatures 1 and 2 each still had some room for improvement in terms of crack resistance of a foamed molded product. Specifically, it was found that there was a difference in crack resistance among parts of a foamed molded product obtained with use of the expandable modified polystyrene-based resin particles and/or among a plurality of foamed molded products each obtained with use of the expandable modified polystyrene-based resin particles. After diligent study of the cause, it was found that a gel fraction of the expandable modified polystyrene-based resin particles differed from particle to particle. The gel fraction is dependent on an amount of the styrene-diene copolymer contained in the expandable modified polystyrene-based resin. Specifically, it was found that a content of the styrene-diene copolymer in the expandable modified polystyrene-based resin particles differed from particle to particle. The inventors of the present invention considered that this was due to the step of copolymerization of the styrene and the diene in the modified polystyrene-based resin particles, and further conducted diligent study. As a result, it was found important to impregnate an organic peroxide that can serve as a polymerization initiator into the polystyrene-based resin particles uniformly among the polystyrene-based resin particles. More specifically, it was newly found that dissolving an organic peroxide in a specific solvent and then adding the solution of the organic peroxide makes it possible to obtain modified polystyrene-based resin particles having little particle-particle difference in gel fraction and that expandable modified polystyrene-based resin particles having little particle-to-particle difference in gel fraction can be obtained from the modified polystyrene-based resin particles. On the basis of this new finding, the inventors of the present invention completed the present invention.

### [2. Method for producing modified polystyrene-based resin particles]

A method for producing modified polystyrene-based resin particles in accordance with an embodiment of the present invention includes a polymerization step of copolymerizing a styrene-based monomer and a conjugated diene-based monomer within particles of a polystyrene-based resin, the polymerization step including adding an organic peroxide dissolved in a solvent having (i) an SP value in a range of 7.0 to 9.5 and (ii) 8 or less carbon atoms.

With the above arrangement, it is possible to produce modified polystyrene-based resin particles from which a foamed molded product excellent in crack resistance can be produced. More specifically, with the above arrangement, it is possible to produce modified polystyrene-based resin particles that have little particle-to-particle variation in gel fraction quality. With the modified polystyrene-based resin particles, it is possible to produce expandable modified polystyrene-based resin particles that have little particle-to-particle variation in gel fraction quality. With the expandable modified polystyrene-based resin particles, it is possible to produce expanded particles from which a foamed molded product having little variation in quality, more specifically, having little variation in crack resistance quality, can be suitably produced.

As such, by carrying out, after the polymerization step of the method for producing modified polystyrene-based resin particles in accordance with an embodiment of the present invention, a blowing agent impregnation step of impregnating a blowing agent together with an antioxidant into the modified polystyrene-based resin particles, it is possible to obtain a method for producing expandable modified polystyrene-based resin particles in accordance with an embodiment of the present invention.

Further, by carrying out, after the blowing agent impregnation step of the method for producing expandable modified polystyrene-based resin particles in accordance with an embodiment of the present invention, an expansion step of expanding the expandable modified polystyrene-based resin particles, it is possible to obtain a method for producing expanded particles in accordance with an embodiment of the present invention.

Further, by molding the expanded particles after the expansion step of the method for producing expanded particles in accordance with an embodiment of the present invention, it is possible to obtain a method for producing a foamed molded product in accordance with an embodiment of the present invention.

The following will illustratively describe modified polystyrene-based resin particles and expandable modified polystyrene-based resin particles as a series of production methods and then illustratively describe a method for producing expanded particles and a method for producing a foamed molded product.

### (Polymerization step)

The method for producing modified polystyrene-based resin particles includes the polymerization step. The polymerization step is a step in which monomers including a styrene-based monomer and a conjugated diene-based monomer, impregnated into polystyrene-based resin particles, are copolymerized to prepare, inside the polystyrene-based resin particles, a copolymer (may be referred to as "styrene-diene copolymer" in the present specification) having a structural unit derived from the styrene-based monomer and a structural unit derived from the conjugated diene-based monomer.

Firstly, the polystyrene-based resin particles subjected to production of modified polystyrene-based resin particles in the polymerization step can be produced by, for example, suspension polymerization typified by suspension seed polymerization, mass polymerization, emulsion polymerization, solution polymerization, or the like. Among these polymerization methods, suspension seed polymerization is preferable as a method for producing polystyrene-based resin particles, in terms of obtaining modified polystyrene-based resin particles that are more uniform in particle diameter.

In the polymerization step, the polystyrene-based resin particles are used as an aqueous suspension suspended in an aqueous system. In the present specification, "aqueous suspension" refers to a liquid (aqueous solution) in which resin particles, expandable resin particles, and/or a monomer liquid drop is/are dispersed in water or an aqueous solution with use of a stirrer or the like.

The polystyrene-based resin particles contained in the aqueous suspension can be particles of a general polystyrene-based resin. The polystyrene-based resin contained in the particles can be a homopolymer of styrene or a copolymer of styrene and other monomer(s). Examples of the other monomer(s) include unsaturated fatty acid esters such as methyl methacrylate and butyl acrylate; unsaturated fatty acids such as acrylic acid, methacrylic acid, and maleic anhydride; and α-methylstyrene, acrylonitrile.

The polystyrene-based resin particles may contain an additive(s) such as a nucleating agent, a filling material, a plasticizer, a flame retarder, a lubricant, a coloring agent, an ultraviolet absorption agent, and the like, in an amount that does not compromise the effects of the present invention.

A volume average particle size of the polystyrene-based resin particles is preferably in a range of approximately 0.1 mm to 3.0 mm, more preferably in a range of 0.5 mm to 1.5 mm, and even more preferably in a range of 0.6 mm to 1.0 mm. The volume-average particle size of the polystyrene-based resin particles can be measured by a particle size analyzer such as an image-processing-type particle size distribution measuring device (Millitrac JPA, manufactured by Nikkiso Co., Ltd.). The volume-average particle size is a particle size corresponding to a volume accumulation of 50% in a case where (i) particle sizes of polystyrene-based resin particles measured from a photograph of an image of the polystyrene-based resin particles are converted into volumes with use of a particle size analyzer and (ii) results thus obtained are represented in the form of a cumulative distribution. The volume-average particle size may be referred to as a medium volume diameter or a median diameter (D50) of a volume distribution by cumulative volume.

The aqueous suspension preferably contains, for example, a dispersing agent such as an organic dispersing agent and an inorganic dispersing agent in order to increase the dispersibility of the polystyrene-based resin particles into water. Examples of the organic dispersing agent include a partially saponified polyvinyl alcohol, polyacrylate, polyvinylpyrrolidone, carboxymethyl cellulose, and methyl cellulose. Examples of the inorganic dispersing agent include calcium pyrophosphate, calcium phosphate, calcium carbonate, magnesium pyrophosphate, magnesium phosphate, magnesium carbonate, and magnesium oxide. In a case where the inorganic dispersing agent is used, it is preferable to use a surfactant in combination. Examples of the surfactant include an anionic surfactant such as α-olefin sodium sulfonate or dodecylbenzene sodium sulfonate. The dispersing agent and the surfactant are not particularly limited in amount used.

In the polymerization step, a weight ratio of water in the aqueous suspension preferably ranges from 1.0/0.6 to 1.0/3.0 in terms of a ratio of a weight of the modified polystyrene-based resin particles to a weight of water.

In the polymerization step, a chain transfer agent and a polymerization adjusting agent may be further used. Examples of the chain transfer agent include mercaptanbased compounds such as n-octylmercaptan, n-dodecylmercaptan, and t-dodecylmercaptan. Examples of the polymerization adjusting agent include α-methylstyrene dimer, which is generally used for polymerization of an acrylonitrile-polystyrene-based resin. α-methylstyrene dimer also contributes to adjustment of a weight average molecular weight of a copolymer, and therefore can also be said to be a chain transfer agent. The chain transfer agent primarily serves to adjust a weight average molecular weight of modified polystyrene-based resin particles. The polymerization adjusting agent primarily serves to adjust a polymerization speed.

In the polymerization step, a content of the polystyrene-based resin particles contained in the aqueous suspension is preferably not less than 60.0 parts by weight relative to 100 parts by weight of a total of the content of the polystyrene-based resin particles in the aqueous suspension, a content of the styrene-based monomer in the aqueous suspension, and a content of the conjugated diene-based monomer in the aqueous suspension. With the above arrangement, the polymerization system can be stabilized when the monomer is impregnated into the polystyrene-based resin particles. In the polymerization step, the content of the polystyrene-based resin particles in the aqueous suspension is preferably not more than 90.0 parts by weight relative to 100 parts by weight of the total of the content of the polystyrene-based resin particles in the aqueous suspension, the content of the styrene-based monomer in the aqueous suspension, and the content of the conjugated diene-based monomer in the aqueous suspension. With the above arrangement, it is possible to sufficiently increase the crack resistance of a foamed molded product obtained from the resultant modified polystyrene-based resin particles. From such a viewpoint, the content of the polystyrene-based resin particles in the aqueous suspension is more preferably 65.0 parts by weight to 85.0 parts by weight relative to 100 parts by weight of the total of the content of the polystyrene-based resin particles in the aqueous suspension, the content of the styrene-based monomer in the aqueous suspension, and the content of the conjugated diene-based monomer in the aqueous suspension.

In the present specification, "monomer components" is used as a general term for monomers used in the polymerization step. That is, "monomer components" is used as a general term for the following monomers (a) to (c) used in the polymerization step: (a) the styrene-based monomer, (b) the conjugated diene-based monomer, and (c) other monomer(s) different from the styrene-based monomer and the conjugated diene-based monomer.

A content of the monomer components in the aqueous suspension is preferably 10.0 parts by weight to 40.0 parts by weight relative to 100 parts by weight of a total of the content of the polystyrene-based resin particles in the aqueous suspension and the content of the monomer components in the aqueous suspension. This makes it possible to produce modified polystyrene-based resin particles having a high gel fraction. Note that the content of the styrene-based monomer in the aqueous suspension is preferably 7.0 parts by weight to 22.0 parts by weight, more preferably 5.0 parts by weight to 25.0 parts by weight, and most preferably 5.0 parts by weight to 30.0 parts by weight relative to 100 parts by weight of the total of the content of the polystyrene-based resin particles in the aqueous suspension and the content of the monomer components in the aqueous suspension.

In a case where an additional polymerization step (described later) is not carried out, the content of the monomer components in the aqueous suspension is preferably 15 parts by weight to 40 parts by weight relative to 100 parts by weight of the total of the content of the polystyrene-based resin particles in the aqueous suspension and the content of the monomer components in the aqueous suspension.

The styrene-based monomer impregnated into the polystyrene-based resin particles contains a styrene derivative in addition to styrene. Examples of the styrene derivative include not only α-methylstyrene, α-ethylstyrene, and α-chlorostyrene, but also divinylbenzene. These styrene-based monomers can be used alone or in combination. Note that divinylbenzene is useful in a case where the combination is used. Further, other monomer(s) may be added as a copolymer component(s) to a degree that the nature of the styrene-diene copolymer is not essentially altered.

The content of the conjugated diene-based monomer in the aqueous suspension is preferably 3.0 parts by weight to 18.0 parts by weight, more preferably 5.0 parts by weight to 15.0 parts by weight, and most preferably 5.0 parts by weight to 10.0 parts by weight relative to 100 parts by weight of the total of the content of the polystyrene-based resin particles in the aqueous suspension and the content of the monomer components in the aqueous suspension. This allows the obtained modified polystyrene-based resin particles to have a styrene-diene copolymer having a sufficient gel fraction, and thus makes it possible to impart a good crack resistance to a foamed molded product produced from the modified polystyrene-based resin particles. It is only necessary that the styrene-based monomer and the conjugated diene-based monomer be mixed within the polystyrene-based resin particles, and the styrene-based monomer and the conjugated diene monomer may be separately impregnated into the polystyrene-based resin particles. The styrene-based monomer and the conjugated diene-based monomer are preferably well impregnated into the interiors of the polystyrene-based resin particles.

Examples of the conjugated diene-based monomer impregnated into the polystyrene-based resin particles include butadiene, isoprene, chloroprene, 1,4-pentadiene, and 1,5-hexadiene. Among these, butadiene is more preferable. Conjugated diene-based monomers of two or more types can be used in combination.

In terms of obtaining modified polystyrene-based resin particles from which a foamed molded product that is even more excellent in crack resistance can be produced, it is preferable that an amount of the styrene-based monomer is greater than that of the conjugated diene-based monomer among the monomer components. The content of the styrene-based monomer is preferably more than 55.0% by weight and not more than 90.0% by weight, more preferably 60.0% by weight to 85.0% by weight, and even more preferably 60.0% by weight to 80.0% by weight relative to 100% by weight of a total amount of the styrene-based monomer and the conjugated diene-based monomer among the monomer components.

Copolymerization of the styrene-based monomer and the conjugated diene-based monomer is carried out with use of a polymerization initiator. Note that the polymerization initiator is subjected to the polymerization step in the form of a polymerization initiator solution in which the polymerization initiator is dissolved in a solvent. The polymerization step is preferably carried out such that the styrene-based monomer and the conjugated diene-based monomer are uniformly impregnated into the polystyrene-based resin particles, and then the polymerization initiator dissolved in the solvent is uniformly impregnated into the polystyrene-based resin particles to initiate the polymerization.

The organic solvent (solvent) used is an organic solvent having an SP value in a range of 7.0 to 9.5 and having 8 or less carbon atoms included in the molecular structure. The SP value, also referred to as a dissolution parameter, is evaluated by the Fedors method, and is expressed in units of (J/cm³)^{1/2}. The SP value of the organic solvent (solvent) is in a range of 7.0 to 9.5, more preferably in a range of 7.5 to 9.5, and even more preferably in a range of 8.0 to 9.0. By using a solvent having an SP value of 7.0 to 9.5, it is possible to suitably dissolve the polymerization initiator and suitably mix the polymerization initiator with the monomer components including the styrene-based monomer and the conjugated diene-based monomer. Thus, it is possible to reduce particle-to-particle variation in quality of modified polystyrene-based resin particles obtained from the polystyrene-based resin particles. Further, the solvent having an SP value of 7.0 to 9.5 is also highly compatible with the polystyrene-based resin (SP value: 9.0 (reference value)) and makes it possible to suitably impregnate the polymerization initiator into the polystyrene-based resin particles. This makes it possible to reduce particle-to-particle variation in quality of modified polystyrene-based resin particles obtained from the polystyrene-based resin particles. Note that the SP values indicated in the present specification are reference values, and SP values may be referred to as appropriate from known technical documents.

Further, an organic solvent having 8 or less carbon atoms included in the molecular structure can be imparted a function as a blowing agent (described later) contained in the expandable modified polystyrene-based resin particles, even if the organic solvent remains in the modified polystyrene-based resin particles. Examples of such an organic solvent include toluene (SP value: 8.9), n-hexane (SP value: 7.3), cyclohexane (SP value: 8.2), normal pentane (SP value: 7.0), and normal heptane (SP value: 7.3).

As the polymerization initiator, it is preferable to use a polymerization initiator having a ten-hour half-life temperature of not lower than 74°C and lower than 90°C. Examples of such a polymerization initiator include an organic peroxide. Examples of the organic peroxide include a radical polymerization initiator such as benzoyl peroxide, lauroyl peroxide, t-butylperoxy benzoate, and 1,1-di-t-butylperoxy-2,4-di-t-butylcyclohexane. In particular, lauroyl peroxide is a preferable polymerization initiator in terms of achieving an efficient reaction between styrene and a conjugated diene. A content of the polymerization initiator in the aqueous suspension is preferably 0.05 parts by weight to 5.00 parts by weight and more preferably 0.10 parts by weight to 2.00 parts by weight relative to 100 parts by weight of the total of the content of the polystyrene-based resin particles in the aqueous suspension and the content of the monomer components in the aqueous suspension.

The polymerization step should be carried out such that (i) the monomer components and the polymerization initiator solution are uniformly impregnated, at a polymerization temperature or a temperature lower than the polymerization temperature, into a system in which the polystyrene-based resin particles are dispersed and suspended in water and (ii) then polymerization is carried out under a temperature condition of 50°C to 100°C for 4 hours to 20 hours. More preferably, the impregnation of the monomer components and the polymerization initiator solution is carried out for not less than 6 hours under a temperature condition of 60°C to 75°C, and then the subsequent polymerization is preferably carried out under a temperature condition of 75°C to 85°C for not less than 4 hours. This allows the styrene-based monomer and the conjugated diene-based monomer together with the polymerization initiator dissolved in an organic solvent to be impregnated into the polystyrene-based resin particles and uniformly polymerized.

In each of the modified polystyrene-based resin particles thus obtained, a styrene-diene copolymer can be scattered, for example, in a state where the copolymer is uniformly dispersed over an entire continuous phase of the polystyrene-based resin or in a state where a density of the copolymer is higher in a center part than in a surface layer part. An average equivalent circle diameter of the styrene-diene copolymer present in the center part is preferably 0.01 µm to 0.20 µm in terms of obtaining a foamed molded product that can exhibit a high crack resistance and a high shock-absorbing property. Note that the "center part" means a region which, when the modified polystyrene-based resin particle is regarded as a true sphere, is within a sphere having a radius of 50 µm from the center of the true sphere.

The average equivalent circle diameter can be obtained by staining the modified polystyrene-based resin particles, taking a transmission electron micrograph of the modified polystyrene-based resin particles, and carrying out measurement on the basis of the transmission electron micrograph. More specifically, in the staining of the modified polystyrene-based resin particles, the styrene-diene copolymer contained in the modified polystyrene-based resin particles is stained with osmium oxide. A micrograph of the stained modified polystyrene-based resin particles is obtained by capturing an image of the stained modified polystyrene-based resin particles at a magnification of 40,000 times with use of a transmission electron microscope (JEM-1200EX4, manufactured by JEOL Ltd.). A portion equivalent to, for example, 3.76 µm² calculated from a scale (0.5 µm) of the micrograph is cut out from the micrograph and subjected to measurement of an average equivalent circle diameter. In the measurement of an average equivalent circle diameter, the cut-out micrograph is copied in a magnification of 4 times, and a portion corresponding to the styrene-diene copolymer stained black with the osmium oxide is cut out from the copy paper of the enlarged copied micrograph. Note that, in a case where the modified polystyrene-based resin particles include a so-called occluded polystyrene particle, which is a polystyrene particle formed inside the styrene-diene copolymer, the styrene-diene copolymer portion is cut out from the copy paper as it is in the state of containing the occluded polystyrene particle. A weight Eg of all cut-out pieces of paper corresponding to the styrene-diene copolymer portions is measured. The weight Eg of the pieces of paper is divided by the number F of the modified polystyrene-based resin particles to calculate an average weight G (unit: g) of the styrene-diene copolymer (gel) contained per modified polystyrene-based resin particle. Separately, on the same transmission electron micrograph subjected to the calculation of the average weight G, a portion including the scale (0.5 µm) is copied in a magnification of 4 times, and a portion equivalent to 0.25 µm² is cut off from the copy paper of the enlarged copied micrograph. Then, a weight of the cut-out copy paper is measured to obtain a weight H (unit: g) of 0.25 µm² of the copy paper. The area of 0.25 µm² of the cut-out copy paper is divided by a weight Hg of the copy paper to calculate an area I (unit: µm²/g) per gram of the copy paper. By multiplying G (unit: g) of the styrene-diene copolymer (gel) contained per modified polystyrene-based resin particle by the area I (unit: µm²/g) per gram of the copy paper, an average area J (unit: µm²) of the styrene-diene copolymer (gel) contained per modified polystyrene-based resin particle is calculated. A square root of a result obtained by dividing the average area J (unit: µm²) of the styrene-diene copolymer by the circumference rate π is multiplied by 2, and a value thus obtained is referred to as an average equivalent circle diameter K (unit: µm).

The copolymer (styrene-diene copolymer) contained in the modified polystyrene-based resin particles is such that the styrene-based monomer and the conjugated diene monomer are radically polymerized in a state of being substantially uniformly mixed inside a modified polystyrene-based resin particle. As such, a random copolymer can be formed in which a structural unit derived from the styrene-based monomer and a structural unit derived from the conjugated diene monomer are copolymerized at random rather than in a block structure. A part of the random copolymer can form, via a conjugated diene monomer unit subjected to the copolymerization, a graft polymerization at a terminal of a polystyrene chain derived from a polystyrene-based resin particle or a terminal of a polystyrene chain partially produced in copolymerization. Further, a structure in which at least two polystyrene chains or random copolymers are crosslinked via a plurality of conjugated diene monomer units can also be formed. In other words, the modified polystyrene-based resin particles each have a structure containing substantially no block part that consists solely of a conjugated diene monomer unit. Thus, the styrene-diene copolymer in the modified polystyrene-based resin particles has a structure completely different from that in rubber-like polymer particles contained in conventional impact-resistant polystyrene-based resins (HIPS) having a long linkage consisting solely of butadiene units. In this point, the modified polystyrene-based resin particles in accordance with an embodiment of the present invention differs from the conventional impact-resistant polystyrene-based resins.

Further, the modified polystyrene-based resin particles have a gel fraction higher than that of the conventional HIPS due to including the graft structure, the crosslinked structure, and the like described above. The high gel fraction of the modified polystyrene-based resin particles is substantially equal to a high gel fraction of the expandable modified polystyrene-based resin particles. The modified polystyrene-based resin particles can have a gel fraction as high as 15.0% by weight to 40.0% by weight. The modified polystyrene-based resin particles have little particle-to-particle variation in gel fraction, and the difference can be not more than 5.0% by weight. The gel fraction of the modified polystyrene-based resin particles and the difference in gel fraction among the particles of the modified polystyrene-based resin particles can be confirmed from the fact that the expandable modified polystyrene-based resin particles have a gel fraction as high as 15.0% by weight to 40.0% by weight and a particle-to-particle difference in gel fraction of the expandable modified polystyrene-based resin particles is not more than 5.0% by weight. Thus, the modified polystyrene-based resin particles make it possible to suitably fuse expanded particles to each other in a foamed molded product (described later) and increase the crack resistance and the shock-absorbing property of a foamed product.

### [2-1. Method for producing modified polystyrene-based resin particles in accordance with variation]

The method for producing modified polystyrene-based resin particles in accordance with an embodiment of the present invention is not limited to the above embodiment. For example, a method for producing modified polystyrene-based resin particles in accordance with a variation can include an additional polymerization step which is carried out after the polymerization step included in the method for producing modified polystyrene-based resin particles and before the modified polystyrene-based resin particles are subjected to production of expandable polypropylene-based resin particles, i.e., before the modified polystyrene-based resin particles are subjected to a blowing agent impregnation step and in which monomer components are added and impregnated into the modified polystyrene-based resin particles and polymerized.

In the method for producing modified polystyrene-based resin particles in accordance with the present variation, polymerization by a polymerization initiator solution containing a polymerization initiator and an organic solvent having (i) an SP value of 7.0 to 9.5 and (ii) 8 or less carbon atoms included in the molecular structure should be carried out at least in the polymerization step, but can be carried out also in the additional polymerization step.

Note that polystyrene-based resin particles, a styrene-based monomer, a conjugated diene-based monomer, and the polymerization initiator solution containing the solvent and the polymerization initiator in the additional polymerization step are the same as those in the polymerization step included in the above embodiment, and description thereof will therefore be omitted.

According to the method for producing modified polystyrene-based resin particles in accordance with the present variation, conducting the additional polymerization step makes it possible to further improve fusibility in fusing, by in-mold molding, expanded particles produced with use of the modified polystyrene-based resin particles as a material.

In the additional polymerization step, the monomer components impregnated into the modified polystyrene-based resin particles obtained by the polymerization step can be in an amount of 3.0 parts by weight to 50.0 parts by weight, preferably 5.0 parts by weight to 30.0 parts by weight, and even more preferably 5.0 parts by weight to 20.0 parts by weight relative to 100 parts by weight of a total amount of the modified polystyrene-based resin particles and the monomer components in the additional polymerization step. In a case where, in the additional polymerization step, the amount of the styrene-based monomer impregnated into the modified polystyrene-based resin particles obtained by the polymerization step is (a) not more than 50.0 parts by weight and (b) not less than 3 parts by weight relative to 100 parts by weight of the total amount of the modified polystyrene-based resin particles and the monomer components in the additional polymerization step, the following advantages are obtained. That is, (a) the amount of the styrene-based monomer being not more than 50.0 parts by weight prevents a content of a rubber-like polymer particles included in the modified polystyrene-based resin particles (i.e., content of the styrene-diene copolymer) from being decreased and thus makes it possible to sufficiently increase the crack resistance of a foamed molded product (described later). Further, (b) the amount of the styrene-based monomer being not less than 3 parts by weight makes it possible to increase fusibility by heat in molding of a foamed molded product obtained from the modified polystyrene-based resin particles.

Further, in the additional polymerization step, a conjugated diene-based monomer may be added to a degree that does not affect the fusibility described above. Examples of the conjugated diene-based monomer include those listed as the conjugated diene-based monomer used in the polymerization step, and can include a conjugated diene-based monomer of the same type as or a different type than the conjugated diene-based monomer in the monomer components in the polymerization step. Further, other monomer(s) may be added as monomer component(s) in the additional polymerization step to a degree that the intended crack resistance, the intended fusibility of the particles, and the intended shock-absorbing property are not affected. In a case where the conjugated diene-based monomer is used in the additional polymerization step, an amount of the conjugated diene-based monomer used (added) can be 0.1 parts by weight to 10 parts by weight, preferably 0.1 parts by weight to 5 parts by weight, and even more preferably 0.1 parts by weight to 2 parts by weight relative to 100 parts by weight of a total amount of the modified polystyrene-based resin particles obtained by the polymerization step and the monomer components added in the additional polymerization step.

The polymerization initiator used in the additional polymerization step may be the same as or different from the polymerization initiator used in the polymerization step. The polymerization initiator used in the additional polymerization step is preferably the above-described polymerization initiator having a ten-hour half-life temperature of not lower than 74°C and lower than 90°C, as in the polymerization step. In particular, benzoyl peroxide is preferably used in the additional polymerization step in terms of achieving an efficient styrene polymerization reaction.

An amount of the polymerization initiator used in the additional polymerization step is 0.05 parts by weight to 5.00 parts by weight, preferably 0.50 parts by weight to 2.00 parts by weight relative to 100 parts by weight of a total of the styrene-based monomer and the polymerization initiator used in the additional polymerization step. In a case where there is an unconsumed residue of the polymerization initiator from the polymerization step, the amount of the polymerization initiator used in the additional polymerization step may be reduced, or use of the polymerization initiator in the additional polymerization step can be omitted.

Also in the additional polymerization step, the monomers can be polymerized with use of a polymerization initiator solution containing an organic solvent having (i) an SP value of 7.0 to 9.5 and (ii) 8 or less carbon atoms included in the molecular structure and the polymerization initiator as in the polymerization step.

A temperature and a time during the additional polymerization step are preferably such that the impregnation with the styrene and the polymerization initiator is carried out at 90°C to 98°C for not less than 1 hour, and then the polymerization is carried out at 105°C to 120°C for not less than 2 hours.

The styrene polymer and/or the styrene-diene copolymer contained in a modified polystyrene-based resin particle thus obtained may be, for example, partially grafted to a polystyrene chain of the polystyrene-based resin particle or graft polymerized on a copolymer having a random structure produced in the polymerization step, and may also have a structure in which these are crosslinked.

The modified polystyrene-based resin particles have a gel fraction higher than that of the above-described conventional HIPS, and further, make it possible to further improve fusibility in fusing, by in-mold molding, expanded particles produced with use of the modified polystyrene-based resin particles as a material. As such, polystyrene-based resin particles produced by the production method in accordance with the present variation are also within the scope of the present invention.

### [2-2. Modified polystyrene-based resin particles]

The modified polystyrene-based resin particles contain a polystyrene-based resin; and a copolymer including a structural unit derived from a styrene-based monomer and a structural unit derived from a conjugated diene-based monomer. Note that the copolymer can be said to be a styrene-diene copolymer including a structural unit derived from a styrene-based monomer and a structural unit derived from a conjugated diene-based monomer. The modified polystyrene-based resin particles can be modified polystyrene-based resin particles in which a proportion of the structural unit derived from the styrene-based monomer is higher than a proportion of the structural unit derived from the conjugated diene-based monomer in the styrene-diene copolymer (an embodiment). The modified polystyrene-based resin particles can be modified polystyrene-based resin particles that are obtained by further impregnating a styrene-based monomer into resin particles containing a polystyrene-based resin and a styrene-diene copolymer and carrying out polymerization (a variation).

The styrene-diene copolymer contained in the modified polystyrene-based resin particles are preferably particles constituted by a copolymer of a styrene-based monomer and a conjugated diene-based monomer. Note here that it is preferable that (i) the modified polystyrene-based resin particles be particles obtained by copolymerization of 60.0 parts by weight to 90.0 parts by weight of the polystyrene-based resin particles and 10.0 parts by weight to 40.0 parts by weight of the monomers in a state where the polystyrene-based resin particles are impregnated with the monomers and (ii) the copolymer obtained by the copolymerization include more than 7.0 parts by weight and not more than 22.0 parts by weight of a structural unit derived from the styrene-based monomer and not less than 3.0 parts by weight and less than 18.0 parts by weight of a structural unit derived from the conjugated diene-based monomer.

The modified polystyrene-based resin particles have a weight average molecular weight of preferably 200,000 to 500,000, more preferably 250,000 to 400,000, and even more preferably 270,000 to 350,000. In this range, good quality is obtained. Examples of a method for measuring the weight average molecular weight include a measurement method that uses gel permeation chromatography (GPC).

### [3. Method for producing expandable modified polystyrene-based resin particles]

A method for producing expandable modified polystyrene-based resin particles in accordance with an embodiment of the present invention includes a blowing agent impregnation step of impregnating a blowing agent together with an antioxidant into modified polystyrene-based resin particles. The blowing agent impregnation step is a step of impregnating the blowing agent into (i) modified polystyrene-based resin particles obtained by the polymerization step included in the method for producing modified polystyrene-based resin particles in accordance with an embodiment or (ii) modified polystyrene-based resin particles obtained by the polymerization step and the additional polymerization step included in the method for producing modified polystyrene-based resin particles in accordance with a variation.

This makes it possible to provide novel modified polystyrene-based resin particles from which a foamed molded product having little variation in crack resistance can be obtained. As such, expandable modified polystyrene-based resin particles produced by the production method in accordance with the present embodiment is also within the scope of the present invention.

Since the modified polystyrene-based resin particles have been described earlier, description thereof will be omitted.

The blowing agent used in the blowing agent impregnation step is preferably a volatile blowing agent such as propane, isobutane, normal butane, isopentane, normal pentane, and neopentane, and these can be used in combination of two or more thereof. These can be used alone. A mixed use of butanes (isobutane and normal butane), a mixed use of pentanes (e.g., isopentane, normal pentane, and neopentane), or the like is preferable. A mixed use of pentanes including normal pentane and isopentane is more preferable. Examples of the blowing agent include, but are not limited to, a volatile blowing agent such as a fluorinated hydrocarbon having an ozone depleting potential of 0 (zero), such as difluoroethane and tetrafluoroethane. These blowing agents may be used alone or in combination of two or more kinds.

An amount of the blowing agent used is preferably not less than 4.0 parts by weight and not more than 10.0 parts by weight, more preferably not less than 5.0 parts by weight and not more than 9.0 parts by weight, and even more preferably not less than 6.0 parts by weight and not more than 8.0 parts by weight, relative to 100 parts by weight of the expandable modified polystyrene-based resin particles.

In the blowing agent impregnation step, an organic solvent (solvent) may be further used in order to adjust an expansion speed. Examples of the organic solvent include cyclohexane and aromatic hydrocarbons such as toluene, xylene, and ethylbenzene. These can be solvents for use in the above-described polymerization initiator solution.

The blowing agent impregnation step is preferably carried out at a temperature of not lower than 110°C in terms of efficiently impregnating the blowing agent into the modified polystyrene-based resin particles. This allows expanded particles having an expanding ratio of not less than 50 times to be produced with use of the expandable modified polystyrene-based resin particles.

The structural unit derived from the conjugated diene-based monomer in the styrene-diene copolymer can be deteriorated over days due to a radical generated by the act of oxygen, light, and/or the like, and may lose elasticity attributable to the structural unit derived from the conjugated diene-based monomer. It is therefore preferable that an antioxidant be contained as an internal additive in the expandable modified polystyrene-based resin particles. However, as described above, there has been discovered no method for sufficiently impregnating an antioxidant into individual particles of expandable modified polystyrene-based resin particles in a method for producing expandable modified polystyrene-based resin particles in which steps from copolymerization of a styrene-based monomer and a conjugated diene-based monomer to impregnation with a blowing agent are carried out as a series of steps.

More specifically, there has been a problem that, in a case where an antioxidant is added in the step of copolymerizing the styrene-based monomer and the conjugated diene-based monomer in the polystyrene-based resin particles, the antioxidant can be impregnated into the polystyrene-based resin particles but a copolymerization reaction is inhibited. There has been another problem that in a case where an antioxidant is added after sufficient progress in a copolymerization reaction and impregnation with the blowing agent, the antioxidant cannot sufficiently be impregnated into the polystyrene-based resin particles. In this case, for example, the expandable modified polystyrene-based resin particles are lost from the system into the outside of the system, and an effect of the antioxidant cannot sufficiently be exhibited.

As a result of diligent study on these problems, the inventors of the present invention discovered a method for producing expandable modified polystyrene-based resin particles which method impregnates an antioxidant into polystyrene-based resin particles together with a blowing agent, thereby (i) allowing the antioxidant to be sufficiently internally added to individual particles of the expandable modified polystyrene-based resin particles which are in the form of particles and (ii) thus effectively increasing stability over days. In the present specification, "stability over days" refers to oxidization stability of expandable modified polystyrene-based resin particles that can be confirmed by stability over days in crack resistance of a foamed molded product obtained from the expandable modified polystyrene-based resin particles and from a foamed product.

That is, the present specification describes a method for producing expandable modified polystyrene-based resin particles that includes (i) a polymerization step of impregnating a styrene-based monomer and a conjugated diene-based monomer into polystyrene-based resin particles and carrying out polymerization to obtain modified polystyrene-based resin particles and (ii) an impregnation step of impregnating an antioxidant into the modified polystyrene-based resin particles together with a blowing agent.

This makes it possible to cause the blowing agent to act as a plasticizer instead of using a plasticizer. Thus, it is possible to suitably prevent a decrease, caused by a plasticizer, in heat resistance of a foamed molded product produced from the expandable modified polystyrene-based resin particles. Further, by impregnating the modified polystyrene-based resin particles with the antioxidant together with the blowing agent, it is possible to produce expandable modified polystyrene-based resin particles in which the antioxidant is dispersed, for example, in the vicinity of a surface layer of the polystyrene-based resin particles and in which the antioxidant is preferably uniformly dispersed in the polystyrene-based resin particles. Further, by impregnating the modified polystyrene-based resin particles with the antioxidant together with the blowing agent, it is possible to produce expandable modified polystyrene-based resin particles that have been impregnated with the antioxidant so as to have little particle-to-particle variation in content of the antioxidant. Thus, it is possible to suitably prevent deterioration in quality over days.

The antioxidant impregnated into the expandable modified polystyrene-based resin particles is preferably a hindered phenol-based antioxidant in terms of long-term prevention of oxidization (maintenance of crack resistance). Examples of the hindered phenol-based antioxidant include pentaerythritol tetrakis [3-(3,5-di-tert-butyl-4-hydroxyphenyl)propionate], octadecyl-3-(3,5-di-tert-butyl-4-hydroxyphenyl)-propionate, N,N'-hexane-1,6-diylbis[3-(3,5-di-tert-butyl-4-hydroxyphenyl)propionamide], 3,3',3",5,5',5"-hexa-tert-butyl-α,α',α"-(mesitylene-2,4,6-triyl)tri-p-cresol, and ethylene-bis(oxyethylene)bis-[3-(5-tert-butyl-4-hydroxy-m-tolyl)propionate]. In particular, it is more preferable to use octadecyl-3-(3,5-di-tert-butyl-4-hydroxyphenyl)-propionate in terms of maintaining a good crack resistance in the long term.

A content of the antioxidant is preferably in a range of not less than 0.03 parts by weight, more preferably in a range of 0.03 parts by weight to 0.20 parts by weight, relative to 100 parts by weight of the expandable modified polystyrene-based resin particles. In a case where the content of the antioxidant is not less than 0.03 parts by weight relative to 100 parts by weight of the expandable modified polystyrene-based resin particles, it is possible to suitably prevent deterioration over time and prevent deterioration in quality. Further, in a case where the content of the antioxidant is not more than 0.20 parts by weight relative to 100 parts by weight of the expandable modified polystyrene-based resin particles, it is possible to obtain a suitable antioxidant effect while reducing the amount of the addition.

Further, the method for producing expandable modified polystyrene-based resin particles can include a step of causing a cell adjusting agent and a plasticizer to be contained in the expandable modified polystyrene-based resin particles to a degree in which effects of the present invention are not compromised.

Examples of the cell adjusting agent include: aliphatic bisamides such as methylenebisstearylamide and ethylenebisstearylamide; polyethylene wax; and acrylicbased polymers (a copolymer of butyl acrylate/methyl methacrylate). A content of the cell adjusting agent in the present expandable resin particles is preferably less than 0.3 parts by weight relative to 100 parts by weight of the expandable resin particles. In a case where the content of the cell adjusting agent in the present expandable resin particles is less than 0.3 parts by weight, uniform cells are formed, and good quality cells are obtained.

The plasticizer can be a high boiling point plasticizer having a boiling point of not lower than 200°C. Examples of such a plasticizer include (a) fatty acid glycerides such as triglyceride stearate, triglyceride palmitate, triglyceride laurate, diglyceride stearate, monoglyceride stearate, (b) vegetable oils such as coconut oil, palm oil, and palm kernel oil, (c) aliphatic esters such as dioctyl adipate and dibutyl sebacate, and (d) organic hydrocarbons such as liquid paraffin.

However, in order to avoid excessive deterioration in heat resistance of a foamed molded product produced from the expandable modified polystyrene-based resin particles, it is preferable that the content of the plasticizer in the expandable modified polystyrene-based resin particles be set low as appropriate.

The method for producing expandable modified polystyrene-based resin particles in accordance with an embodiment of the present invention can reduce a plasticizer content because an antioxidant can be contained by a blowing agent instead of by a plasticizer. This makes it easy to design a foamed molded product to be highly heat resistant, and this ease is one of the advantages.

Further, the method for producing expandable modified polystyrene-based resin particles is preferably such that, after the blowing agent impregnation step, an anti-blocking agent is added, as a coating compound, to the obtained expandable modified polystyrene-based resin particles. This makes it possible to suitably prevent, during production of expanded particles (described later) from the expandable modified polystyrene-based resin particles, a so-called blocking in which the obtained expanded particles bond together.

Examples of the anti-blocking agent include: fatty acid metal salts such as zinc stearate, calcium stearate, magnesium stearate, aluminum stearate, zinc oleate, magnesium oleate, zinc laurate, calcium laurate; and silicone oils such as polymethylphenylsiloxane, polyphenylsiloxane, and polymethylsiloxane.

The method for producing expandable modified polystyrene-based resin particles can include a step of causing the expandable modified polystyrene-based resin particles to optionally contain other additive(s) in addition to the modified polystyrene-based resin particles and the blowing agent. Examples of the other additive(s) include solvents, flame retarders, auxiliary flame retarders, heat ray radiation inhibitors, pigments, dyes, and antistatic agents.

After the blowing agent impregnation step, the method for producing expandable modified polystyrene-based resin particles preferably further includes a drying step of carrying out a drying treatment with respect to the expandable modified polystyrene-based resin particles. The expandable modified polystyrene-based resin particles can be obtained while being dispersed in the aqueous suspension. As such, by carrying out the drying step, it is possible to suitably use the obtained expandable modified polystyrene-based resin particles for, for example, production of polystyrene-based pre-expanded particles and a foamed molded product (described later). Note that since the antioxidant can be added to the expandable modified polystyrene-based resin particles in the impregnation step of the method for producing expandable modified polystyrene-based resin particles in accordance with an embodiment of the present invention, it is possible to add the antioxidant efficiently with less loss as compared with a case in which the expandable modified polystyrene-based resin particles are added in or after the drying step.

In the drying step, the drying treatment can be carried out with respect to the expandable resin particles by a method that is exemplified by, but not particularly limited to, an agitated trough or cylindrical dryer, a box-type or band-type through-flow dryer, and a fluidized-bed dryer.

### [3-1. Expandable modified polystyrene-based resin particles]

The expandable modified polystyrene-based resin particles in accordance with the present invention have a gel fraction of 15.0% by weight to 40.0% by weight relative to 100% by weight of the expandable modified polystyrene-based resin particles, due to the high gel fraction of the modified polystyrene-based resin particles in accordance with an embodiment of the present invention. The gel fraction is more preferably 20.0% by weight to 35.0% by weight, and even more preferably 24.0% by weight to 28.0% by weight. In a case where the expandable modified polystyrene-based resin particles have a gel fraction of not less than 15.0% by weight, it is possible to improve the crack resistance of a foamed molded product. In a case where the expandable modified polystyrene-based resin particles have a gel fraction of not more than 40.0% by weight, it is possible to suitably expand the expandable modified polystyrene-based resin particles at a predetermined ratio of up to 50 times.

A difference in gel fraction of the expandable modified polystyrene-based resin particles in accordance with the present invention can be not more than 5.0% by weight. This makes it possible to improve variation in crack resistance of a foamed molded product which variation is caused by particle-to-particle variation in quality. The difference in gel fraction is found in terms of a difference in measurement results of gel fraction evaluated with respect to a plurality of samples collected from the expandable modified polystyrene-based resin particles. For a method for evaluating the difference in gel fraction of the expandable modified polystyrene-based resin particles, see the details in the "Examples" section.

The present specification also describes expandable modified polystyrene-based resin particles which contain: modified polystyrene-based resin particles in which a copolymer of a styrene-based monomer and a conjugated diene-based monomer is dispersed in a polystyrene-based resin; a blowing agent; and an antioxidant, and in which the antioxidant is contained in the modified polystyrene-based resin particles. In the expandable modified polystyrene-based resin particles in accordance with an embodiment of the present invention, an antioxidant can be sufficiently internally added to the expandable modified polystyrene-based resin particles which are in the form of particles, so that stability over days is effectively increased.

As a result of diligent study, the inventors of the present invention discovered a method for producing expandable modified polystyrene-based resin particles which method impregnates an antioxidant into polystyrene-based resin particles together with a blowing agent, thereby (i) allowing the antioxidant to be sufficiently internally added to the expandable modified polystyrene-based resin particles which are in the form of particles and (ii) thus effectively increasing stability over days.

### [4. Expanded particles and production method thereof]

A method for producing expanded particles in accordance with an embodiment of the present invention includes an expansion step of expanding expandable modified polystyrene-based resin particles produced by the method for producing expandable modified polystyrene-based resin particles in accordance with an embodiment of the present invention.

The expansion step is preferably carried out by heating the expandable modified polystyrene-based resin particles with steam or the like to expand the expandable modified polystyrene-based resin particles. Specific examples of the expansion method include a method in which (1) to (3) are sequentially carried out: (1) the expandable resin particles are placed in a container provided with a stirrer, and (2) the expandable modified polystyrene-based resin particles are heated with use of a heat source such as steam, so that (3) the expandable modified polystyrene-based resin particles are expanded until a desired expanding ratio is achieved, so as to obtain expanded particles.

The expanded particles thus obtained, like the expandable modified polystyrene-based resin, have little particle-to-particle variation in gel fraction. As such, expanded particles produced by the method for producing expanded particles in accordance with an embodiment of the present invention are also within the scope of the present invention.

Note that the expanded particles in accordance with an embodiment of the present invention themselves have high crack resistance, and can be used as a loose-fill cushioning material and the like.

### [5. Foamed molded product and production method thereof]

A method for producing a foamed molded product in accordance with an embodiment of the present invention includes a molding step of molding a foamed molded product from expanded particles produced by the method for producing expanded particles in accordance with an embodiment of the present invention.

The obtained foamed molded product has little variation in quality, that is, in gel fraction, as with the modified polystyrene-based resin particles, the expandable modified polystyrene-based resin particles, and the expanded particles. As such, a foamed molded product produced by the method for producing a foamed molded product in accordance with an embodiment of the present invention is also within the scope of the present invention.

An in-mold molding method should be employed for production of the foamed molded product. The in-mold molding method is a method in which a mold is filled with expanded particles and the expanded particles are fused together by heating to obtain a foamed molded product. Specific examples of the in-mold molding method include a method in which a mold that can be closed but cannot be sealed is filled with the expanded particles, and the expanded particles are molded into a foamed molded product by being heated and fused with use of steam.

In the foamed molded product thus obtained, expanded particles are sufficiently and uniformly fused to each other, and there is little variation in evaluation results of crack resistance of the foamed molded product. Evaluation of crack resistance is made on the basis of a half fracture height according to JISK7211-1: 2006. For details of the evaluation method, see the description in Examples.

### Examples

The following description will discuss Examples of the present invention.

### (Evaluation of expandability)

First, an expandable modified polystyrene-based resin in a measured amount of 10 g was introduced into a steamer and steamed for 5 minutes. A bulk volume of resultant pre-expanded particles was measured with use of a 1000-mL graduated cylinder. A volume magnification of the pre-expanded particles was calculated in accordance with an equation below. A case in which the volume magnification was not less than 65 times was evaluated to be "good", and cases other than this were evaluated to be "bad". 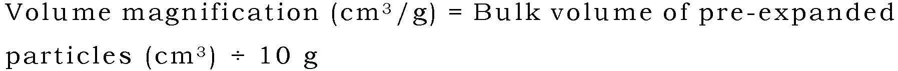 Volume magnification (cm3/g) = Bulk volume of pre-expanded particles (cm3) ÷ 10 g

### (Evaluation of crack resistance)

For each Example and for each Comparative Example, 20 sheets of a foamed molded product, each of which sheets had a size of 450 × 300 × 25 (thickness) mm, were prepared. From each sheet of the foamed molded product, 10 sample sheets each having a size of 200 mm × 40 mm × 20 (thickness) mm were prepared. That is, 20 sets of test pieces, each set consisting of 10 sample sheets, were prepared.

A half fracture height was calculated in accordance with JISK7211-1: 2006 as follows. A set of 10 sample sheets of the foamed molded product were stacked on top of each other, each of which sheets was in a size of 200 mm × 40 mm × 20 (thickness) mm. A 321-g rigid ball was dropped onto the stack of sample sheets of the foamed molded product. Equation (1) below was used to calculate a half fracture height. For each Example and each Comparative Example, the same evaluation was conducted 20 times to check a range of variations in measurement of the foamed molded product. The range of variations in measurement was evaluated such that a case in which a difference between a maximum value and a minimum value among the 20 evaluation results was less than 2 cm was evaluated to be "good", and cases other than this was evaluated to be "bad". As a foamed molded product for use in evaluation over days, test pieces were prepared with use of a foamed molded product that had been kept outdoors for 50 days after being produced. ${H}_{50} = {H}_{i} + d \left[\frac{Σ \left(i⋅{n}_{i}\right)}{N}\pm 0.5\right]$ (1)
H₅₀: A half fracture height (cm)
Hᵢ: A test height (cm) that corresponds to a case in which a height standard (i) is 0, and the test piece is predicted to fracture at this height.
d: A distance (cm) by which the test height is raised or lowered.
i: A height standard (i = ...-3, -2, -1, 0, 1, 2, 3,...) that is 0 at H₁ and is incremented or decremented by one.
nᵢ: The number of test pieces fractured (or not fractured) at each standard.
N: The number of test pieces fractured (or not fractured) (N = Σni). The data of either one of the numbers that is greater than the other is used. In a case where the number of test pieces fractured and the number of test pieces not fractured are equal, either number can be used.
±0.5: In a case where the data of the number of test pieces fractured is used, the number is treated as a negative value, and in a case where the data of the number of test pieces not fractured is used, the number is treated as a positive value.

### (Evaluation of gel fraction)

For each Example and each Comparative Example, 0.05 g of expandable modified polystyrene-based resin particles were dissolved in 20 ml of tetrahydrofuran (THF). The resultant solution was stirred with use of a magnetic stirrer for 3 hours. Then, the solution after being stirred was filtered with use of weighed filter paper, and the substance (gel component) remaining on the filter paper was dried at 30°C for 24 hours together with the filter paper. The gel components after drying were weighed together with the filter paper, and a gel fraction was calculated in accordance with Equation (2) below. The gel fraction is calculated as a proportion of an insoluble fraction with respect to an organic solvent contained in the expandable modified polystyrene-based resin particles. $\begin{matrix}Gel fraction \left(% by weight\right) \\ = \left\{\left(weight of filter paper after filtration\right)-\left(\begin{matrix}weight of filter \\ paper before filtration\end{matrix}\right)\right\} / 0.05 \times 100\end{matrix}$ (2)

For each Example and each Comparative Example, the evaluation of gel fraction was carried out 10 times, and an average value of the evaluation results and variation among evaluation results were checked. The evaluation of variation was based on a difference between a maximum value and a minimum value among evaluation results of gel fraction. A variation less than 5.0% was evaluated to be "good", and a variation not less than 5.0% was evaluated to be "bad".

### [Example 1]

### (1) Method for producing expandable modified polystyrene-based resin particles

110 parts by weight of water, 0.013 parts by weight of α-olefin sodium sulfonate, 0.44 parts by weight of calcium phosphate, and 71.0 parts by weight of polystyrene-based resin particles were introduced, as an aqueous suspension, into a reactor with a stirrer having an internal volume of 5 liters. The introduced polystyrene-based resin particles had an average particle size of 1 mm. Next, the reactor was sealed, and under stirring, the aqueous suspension in the reactor was heated up to 70°C. Subsequently, as a polymerization step, the aqueous suspension heated to 70°C was impregnated for 4 hours with a monomer mixture of styrene and a conjugated diene in respective amounts indicated in "Example 1" in Table 1 below, a polymerization initiator solution containing 0.42 parts by weight of cyclohexane and 0.066 parts by weight of lauroyl peroxide was added to the aqueous suspension of the polystyrene-based resin particles impregnated with the monomer mixture, and a resultant mixture was further heated to 80°C to carry out polymerization for 6 hours.

Subsequently, as an additional polymerization step, the aqueous suspension subjected to the polymerization step was heated to 98°C, 9.10 parts by weight of styrene and 0.05 parts by weight of 30% aqueous benzoyl peroxide solution were added over one hour, a resultant mixture was heated to 114°C over another one hour, and polymerization was carried out for 2 hours. Thus obtained was modified polystyrene-based resin particles.

Then, as a blowing agent impregnation step, Irganox (registered trademark) 1076 (hindered phenol-based antioxidant, available from BASF Japan Ltd.) dissolved in 0.38 parts of cyclohexane was injected into the reaction container in which the modified polystyrene-based resin particles had been obtained, and then 6 parts by weight of pentane (normal pentane/isopentane = 40/60) was injected as a blowing agent into the reaction container. Under the conditions of 114°C for 2 hours, the modified polystyrene-based resin particles were impregnated with the pentane, then cooled to 30°C, released from the reactor, and dehydrated and dried. Thus obtained was expandable modified polystyrene-based resin particles of Example 1.

### (2) Method for producing expanded particles

Into a normal pressure blowing device, 1 kg to 2 kg of the expandable resin particles were introduced. While the expandable resin particles were stirred, steam was blown in at a setting of approximately 0.061 MPa and air was supplied to expand the expandable modified polystyrene-based resin particles over a period of approximately 1 minute to 3 minutes until an expansion ratio of 50 times was achieved. Thus obtained was modified expanded particles of Example 1.

### (Method for producing foamed molded product)

A foamed molded product in accordance with Example 1 from the expanded particles was produced by in-mold molding. Note that the in-mold molding was carried out after the modified expanded particles were left for 24 hours. Conditions for the in-mold molding method were as follows. Molding machine: TH90VMII, TOYO MACHINERY & METAL CO., LTD.

### Molding conditions

Preheating: 3 seconds
Cross steaming: 4 seconds
Counter cross steaming: 1 second
Autoclaving: 12 seconds
Auxiliary heating: 3 seconds
Heat retaining: 3 seconds
Water-cooling: 20 seconds
Vacuum cooling: 100 seconds
Set steam pressure at autoclaving: cavity/core = 0.066/0.087 (MPa)

### [Examples 2 to 7, Comparative Examples 1 to 3, Reference Examples 1 and 2]

Expandable modified polystyrene-based resin particles, expanded particles, and foamed molded products in accordance with Examples 2 to 7, Comparative Examples 1 to 3, and Reference Examples 1 and 2 were produced by the same production methods as the production methods indicated in Example 1, except for employing raw materials and amounts of the raw materials added indicated in Table 1 below. Evaluation of crack resistance and measurement of gel fraction were carried out. Evaluation results are shown in Table 1 below. Note that "DBS" in Table 1 is an abbreviation of dibutyl sebacate.

**[Table 1]**

| | | | | Example 1 | Example 2 | Example 3 | Example 4 | Example 5 | Example 6 |
|---|---|---|---|---|---|---|---|---|---|
| First polymerization step | Polystyrene-based resin | | pt. wt | 71.0 | 71.0 | 71.0 | 71.0 | 71.0 | 71.0 |
| | Styrene | | pt. wt | 11.6 | 11.6 | 11.6 | 11.6 | 11.6 | 11.6 |
| | Butadiene | | pt. wt | 8.30 | 8.30 | 8.30 | 8.30 | 8.30 | 8.30 |
| | Dilauroyl peroxide (P-5) | | pt. wt | 0.06 | 0.06 | 0.06 | 0.06 | 0.06 | 0.06 |
| | Organic solvent | | pt. wt | Cyclohexane | Toluene | Cyclohexane | Cyclohexane | Cyclohexane | Cyclohexane |
| | SP value of organic solvent | | | 8.2 | 8.9 | 8.2 | 8.2 | 8.2 | 8.2 |
| | Number of carbon atoms in molecular structure of organic solvent | | | 6 | 7 | 6 | 6 | 6 | 6 |
| | P-5 dissolution | | - | Good (dissolved) | Good (dissolved) | Good (dissolved) | Good (dissolved) | Good (dissolved) | Good (dissolved) |
| | Antioxidant | | pt. wt | 0 | 0 | 0 | 0 | 0 | 0 |
| Second polymerization step | Styrene | | pt. wt | 9.1 | 9.1 | 9.1 | 9.1 | 9.1 | 9.1 |
| | Benzoyl peroxide (P-3) | | pt. wt | 0.05 | 0.05 | 0.05 | 0.05 | 0.05 | 0.05 |
| | Antioxidant | | pt. wt | 0 | 0 | 0 | 0 | 0 | 0 |
| Blowing agent impregnation step | Temperature | | °C | 114 | 114 | 114 | 114 | 114 | 114 |
| | Time | | hour | 2 | 2 | 2 | 2 | 2 | 2 |
| | Pentane | | pt. wt | 6 | 6 | 6 | 6 | 5 | 3.5 |
| | Butane | | pt. wt | 0 | 0 | 0 | 2 | 3 | 4.5 |
| | Antioxidant | | pt. wt | 0.1 | 0.1 | 0.03 | 0.1 | 0.1 | 0.1 |
| Expandability | Not less than 65 times? | | - | Good | Good | Good | Good | Good | Bad |
| Expandable modified polystyrene-based resin particles | Gel fraction | Average value | % by weight | 27.3 | 27.5 | 27.8 | 27.4 | 27.3 | 27.2 |
| | | Variation | | 27.1 to 27.7 | 27.3 to 28.1 | 27.4 to 28.3 | 27.1 to 27.9 | 27.1 to 27.7 | 27.1 to 27.6 |
| | Difference in gel fraction | | - | Good | Good | Good | Good | Good | Good |
| Evaluation of expanded foamed molded product | Magnification | | cm³/g | 50 | 50 | 50 | 50 | 50 | 50 |
| | Half fracture height (immediately after production) | | cm | 21 | 21 | 21 | 21 | 21 | 21 |
| | Half fracture height (50 days after production) | | cm | 20 | 20 | 20 | 20 | 20 | 20 |
| | Variation in half fracture height among expanded foamed molded products (immediately after production) | | - | Good | Good | Good | Good | Good | Good |
| | Variation in half fracture height among expanded foamed molded products (50 days after production) | | - | Good | Good | Good | Good | Good | Good |

| | | | | Comparative Example 1 | Example 7 | Comparative Example 2 | Comparative Example 3 | Reference Example 1 | Reference Example 2 |
|---|---|---|---|---|---|---|---|---|---|
| First polymerization step | Polystyrene-based resin | | pt. wt | 71.0 | 71.0 | 71.0 | 71.0 | 71.0 | 71.0 |
| | Styrene | | pt. wt | 11.6 | 11.6 | 11.6 | 11.6 | 11.6 | 11.6 |
| | Butadiene | | pt. wt | 8.30 | 8.30 | 8.30 | 8.30 | 8.30 | 8.30 |
| | Dilauroyl peroxide (P-5) | | pt. wt | 0.06 | 0.06 | 0.06 | 0.06 | 0.06 | 0.06 |
| | Organic solvent | | pt. wt | - | Cyclohexane | DBS | Liquid paraffin | Cyclohexane | Cyclohexane |
| | SP value of organic solvent | | | - | 8.2 | 9.1 | 16.4 | 8.2 | 8.2 |
| | Number of carbon atoms in molecular structure of organic solvent | | | - | 6 | 18 | >10 | 6 | 6 |
| | P-5 dissolution | | - | - | Good (dissolved) | Bad (not dissolved) | Bad (not dissolved) | Good (dissolved) | Good (dissolved) |
| | Antioxidant | | pt. wt | 0 | 0 | 0 | 0 | 0.1 | 0 |
| Second polymerization step | Styrene | | pt. wt | 9.1 | 9.1 | 9.1 | 9.1 | 9.1 | 9.1 |
| | Benzoyl peroxide (P-3) | | pt. wt | 0.05 | 0.05 | 0.05 | 0.05 | 0.05 | 0.05 |
| | Antioxidant | | pt. wt | 0 | 0 | 0 | 0 | 0 | 0.1 |
| Blowing agent impregnation step | Temperature | | °C | 114 | 114 | 114 | 114 | 114 | 114 |
| | Time | | hour | 2 | 2 | 2 | 2 | 2 | 2 |
| | Pentane | | pt. wt | 6 | 6 | 6 | 6 | 6 | 6 |
| | Butane | | pt. wt | 0 | 0 | 0 | 0 | 0 | 0 |
| | Antioxidant | | pt. wt | 0 | 0 | 0.1 | 0.1 | 0 | 0 |
| Expandability | Not less than 65 times? | | - | Good | Good | Good | Good | Reaction did not proceed | Reaction did not proceed |
| Expandable modified polystyrene-based resin particles | Gel fraction | Average value | % by weight | - | 27.8 | - | - | | |
| | | Variation | | 20.7 to 28.1 | 27.5 to 28.2 | 20.2 to 28.3 | 19.9 to 28.0 | | |
| | Difference in gel fraction | | - | Bad | Good | Bad | Bad | | |
| Evaluation of expanded foamed molded product | Magnification | | cm³/g | 50 | 50 | 50 | 50 | | |
| | Half fracture height (immediately after production) | | cm | 17 to 22 | 21 | 17 to 22 | 17 to 22 | | |
| | Half fracture height (50 days after production) | | cm | 7 to 10 | 10 | 17 to 21 | 17 to 21 | | |
| | Variation in half fracture height among expanded foamed molded products (immediately after production) | | - | Bad | Good | Bad | Bad | | |
| | Variation in half fracture height among expanded foamed molded products (50 days after production) | | - | Bad | Good | Bad | Bad | | |

As indicated in Table 1, the expandable modified polystyrene-based resin particles of Examples 1 to 7 each exhibited a high gel fraction and less variation as compared with the expandable modified polystyrene-based resin particles of Comparative Examples 1 to 3. It was thus confirmed that the expandable modified polystyrene-based resin particles of Examples 1 to 7, each of which had been produced by dissolving a polymerization initiator in a solvent having (i) an SP value of 7.0 to 9.5 and (ii) 8 or less carbon atoms included in the molecule and carrying out polymerization, had little variation in quality. Further, the foamed molded products respectively produced from the expandable modified polystyrene-based resin particles of Examples 1 to 6 had little variation in evaluation results of half fracture height as compared with the foamed molded products of Comparative Examples 1 to 3, at both of the following timings: immediately after the production; and 50 days after the production. It can thus be confirmed that the foamed molded products of Examples 1 to 6 had been produced with little variation in quality.

Further, by comparing Examples 1 to 6 with Example 7 and Reference Examples 1 and 2, it was confirmed that impregnating an antioxidant into expandable modified polystyrene-based resin particles in the blowing agent impregnation step makes it possible to more effectively prevent deterioration over days in a foamed molded product produced from the expandable modified polystyrene-based resin particles.

### Industrial Applicability

An embodiment of the present invention makes it possible to provide: a method for producing novel modified polystyrene-based resin particles from which an expandable polystyrene-based resin can be obtained, the expandable polystyrene-based resin particles little varying from particle to particle in terms of gel fraction, so that a foamed molded product having little variation in crack resistance can be obtained from the expandable polystyrene-based resin; a method for producing the expandable modified polystyrene-based resin particles; and technologies related thereto. Thus, an embodiment of the present invention is suitably applicable to the fields of automobiles and building materials.

## Claims

1. A method for producing expandable modified polystyrene-based resin particles, comprising
(i) a polymerization step of obtaining modified polystyrene-based resin particles by copolymerizing a styrene-based monomer and a conjugated diene-based monomer which are impregnated into polystyrene-based resin particles,
the polymerization step including adding a polymerization initiator dissolved in a solvent having an SP value in a range of 7.0 to 9.5 as determined in accordance with the description and having 8 or less carbon atoms; and
(ii) a blowing agent impregnation step of impregnating a blowing agent together with an antioxidant into the modified polystyrene-based resin particles.

2. The method as set forth in claim 1, wherein the solvent includes at least one solvent selected from the group consisting of cyclohexane and toluene.

3. A method for producing expanded particles, comprising an expansion step of expanding an expandable modified polystyrene-based resin produced by the method recited in claim 1 or 2.

4. A method for producing a foamed molded product, comprising a molding step of molding the expanded particles produced by the method recited in claim 3.

5. Expandable modified polystyrene-based resin particles, comprising:
modified polystyrene-based resin particles; and
a blowing agent,
the modified polystyrene-based resin particles, comprising:
a polystyrene-based resin; and
a copolymer including a structural unit derived from a styrene-based monomer and a structural unit derived from a conjugated diene-based monomer,
the expandable modified polystyrene-based resin particles having a gel fraction as high as 15.0% by weight to 40.0% by weight relative to 100% by weight of the expandable modified polystyrene-based resin particles, and
the expandable modified polystyrene-based resin particles having a difference of not more than 5.0% by weight in gel fraction as determined in accordance with the description.

6. The expandable modified polystyrene-based resin particles as set forth in claim 5, wherein an antioxidant is contained in the expandable modified polystyrene-based resin particles.

7. Expanded particles obtained by expanding the expandable modified polystyrene-based resin particles recited in claim 5 or 6.

8. A foamed molded product obtained by molding the expanded particles recited in claim 7.

## Patentansprüche

1. Ein Verfahren zur Herstellung expandierbarer modifizierter Harzteilchen auf Polystyrolbasis, umfassend
(i) einen Polymerisationsschritt des Erhalts modifizierter Harzteilchen auf Polystyrolbasis durch Copolymerisation eines Monomers auf Styrolbasis und eines Monomers auf Basis eines konjugierten Diens, die in Harzteilchen auf Polystyrolbasis imprägniert sind,
wobei der Polymerisationsschritt die Zugabe eines Polymerisationsinitiators, der in einem Lösungsmittel mit einem SP-Wert in einem Bereich von 7,0 bis 9,5, wie gemäß der Beschreibung bestimmt, und 8 oder weniger Kohlenstoffatomen aufweist, gelöst ist, beinhaltet; und
(ii) einen Treibmittel-Imprägnierungsschritt, des Imprägnierens eines Treibmittels zusammen mit einem Antioxidans in die modifizierten Harzteilchen auf Polystyrolbasis.

2. Das Verfahren nach Anspruch 1, wobei das Lösungsmittel mindestens ein Lösungsmittel, ausgewählt aus der Gruppe bestehend aus Cyclohexan und Toluol, beinhaltet.

3. Ein Verfahren zur Herstellung expandierter Teilchen, umfassend einen Expansionsschritt des Expandierens eines durch das Verfahren nach Anspruch 1 oder 2 hergestellten expandierbaren modifizierten Harzes auf Polystyrolbasis.

4. Ein Verfahren zur Herstellung eines geschäumten Formprodukts, umfassend einen Formungsschritt des Formens der durch das Verfahren nach Anspruch 3 hergestellten expandierten Teilchen.

5. Expandierbare modifizierte Harzteilchen auf Polystyrolbasis, umfassend:
modifizierte Harzteilchen auf Polystyrolbasis; und
ein Treibmittel,
wobei die modifizierten Harzteilchen auf Polystyrolbasis umfassen:
ein Harz auf Polystyrolbasis; und
ein Copolymer, das eine von einem Monomer auf Styrolbasis abgeleitete Struktureinheit und eine von einem Monomer auf der Basis eines konjugierten Diens abgeleitete Struktureinheit beinhaltet,
wobei die expandierbaren modifizierten Harzteilchen auf Polystyrolbasis einen Gelanteil in Höhe von 15,0 Gew.-% bis 40,0 Gew.-%, bezogen auf 100 Gew.-% der expandierbaren modifizierten Harzteilchen auf Polystyrolbasis, aufweisen, und
die expandierbaren modifizierten Harzteilchen auf Polystyrolbasis einen Unterschied von nicht mehr als 5,0 Gew.-% des Gelanteils, wie gemäß der Beschreibung bestimmt, aufweisen.

6. Die expandierbaren modifizierten Harzteilchen auf Polystyrolbasis nach Anspruch 5, wobei ein Antioxidans in den expandierbaren modifizierten Harzteilchen auf Polystyrolbasis enthalten ist.

7. Expandierte Teilchen, erhalten durch Expandieren der expandierbaren modifizierten Harzteilchen auf Polystyrolbasis nach Anspruch 5 oder 6.

8. Ein geschäumtes Formprodukt, erhalten durch Formen der expandierten Teilchen nach Anspruch 7.

## Revendications

1. Procédé de production de particules de résine à base de polystyrène expansible modifié, comprenant
(i) une étape de polymérisation consistant à obtenir des particules de résine à base de polystyrène modifié par copolymérisation d'un monomère à base de styrène et d'un monomère à base de diène conjugué qui sont imprégnés en particules de résine à base de polystyrène,
l'étape de polymérisation comportant l'ajout d'un initiateur de polymérisation dissous dans un solvant ayant une valeur SP dans une plage de 7,0 à 9,5 telle que déterminée conformément à la description et ayant 8 atomes de carbone ou moins ; et
(ii) une étape d'imprégnation d'agent de soufflage consistant à imprégner un agent de soufflage avec un antioxydant dans les particules de résine à base de polystyrène modifié.

2. Procédé selon la revendication 1, dans lequel le solvant inclut au moins un solvant choisi dans le groupe consistant en cyclohexane et toluène.

3. Procédé de production de particules expansées, comprenant une étape d'expansion d'une résine à base de polystyrène expansible modifié produite par le procédé revendiqué selon la revendication 1 ou 2.

4. Procédé de production d'un produit moulé de mousse, comprenant une étape de moulage consistant à mouler les particules expansées produites par le procédé revendiqué selon la revendication 3.

5. Particules de résine à base de polystyrène expansible modifié, comprenant :
des particules de résine à base de polystyrène modifié ; et
un agent de soufflage,
les particules de résine à base de polystyrène modifié, comprenant :
une résine à base de polystyrène ; et
un copolymère comportant un motif structurel dérivé d'un monomère à base de styrène et un motif structurel dérivé d'un monomère à base de diène conjugué,
les particules de résine à base de polystyrène expansible modifié ayant une fraction gel allant de 15,0 % en poids à 40,0 % en poids par rapport à 100 % en poids des particules de résine à base de polystyrène expansible modifié, et
les particules de résine à base de polystyrène expansible modifié ayant une différence de maximum 5,0 % en poids en fraction gel telle que déterminée conformément à la description.

6. Particules de résine à base de polystyrène expansible modifié telles que présentées dans la revendication 5, dans lesquelles un antioxydant est contenu dans les particules de résine à base de polystyrène expansible modifié.

7. Particules expansées obtenues par expansion des particules de résine à base de polystyrène expansible modifié revendiquées dans la revendication 5 ou 6.

8. Produit moulé de mousse obtenu par moulage des particules expansées selon la revendication 7.
